# FASCICULE DE BREVET EUROPEEN

(11) **EP 0 790 182 B1**
(45) Date de publication et mention de la délivrance du brevet: **16.08.2000**
(21) Numéro de dépôt: 97400322.0
(22) Date de dépôt: 13.02.1997
(51) Int. Cl.: B64D 45/02, H02G 13/00

(54) **Bande parafoudre**
Blitzableitungsstreifen
Lightning diverter strip

(30) Priorité: 15.02.1996 FR 9601845
(43) Date de publication de la demande: 20.08.1997
(73) Titulaire: Bocherens, Eric, 83800 Toulon (FR)
(72) Inventeur: Bocherens, Eric, 83800 Toulon (FR)
(74) Mandataire: Le Moenner, Annie

(56) Documents cités:
- WO-A-83/01172
- FR-A- 2 400 245
- US-A- 4 445 161

## Description

La présente invention concerne une bande parafoudre, notamment pour la protection de radômes d'aéronefs.

Il est connu que les aéronefs, lorsqu'ils traversent une zone orageuse, peuvent subir des impacts de foudre. Ces impacts de foudre se localisent de façon privilégiée aux extrémités de l'aéronef; ainsi, le radôme constitue une zone à risque. La foudre est susceptible d'y provoquer des dégâts importants, le radôme constituant 1' enveloppe protectrice, transparente aux ondes électromagnétiques, de matériels électroniques forts coûteux tels que des radars ou des contre-mesures.

Pour protéger le radôme ou d'autres parties de l'aéronef, il est connu de placer des bandes parafoudres sur la surface extérieure à protéger. Ces bandes doivent constituer un point d'impact privilégié de la foudre venant frapper la surface, et assurer l'acheminement de forts courants de décharge ( pouvant atteindre 200 kA ) du point d'impact à la masse de l'aéronef. Ces bandes parafoudres doivent de plus être transparentes aux ondes électromagnétiques, c'est à dire, perturber le moins possible la transmission des ondes à travers la paroi du radôme.

Divers types de bandes parafoudres sont utilisés. On connaît par exemple les bandes métalliques pleines dont le principe est de véhiculer l'énergie d'un arc de foudre par conduction du courant dans leur épaisseur. Cependant, de telles bandes présentent de nombreux inconvénients. Lors d'impacts de foudre importants, l'énergie libérée peut vaporiser une partie du métal et provoquer des perforations dans le radôme. De plus, en raison de leur fort coefficient de réflexion, ces bandes perturbent de façon importante la transmission des ondes électromagnétique à travers la paroi du radôme.

Le brevet GB n° 2 132 027 décrit une bande métallique plus performante, d'épaisseur voisine de 0,25 mm, et comportant des trous rectangulaires pour diminuer la masse de métal vaporisable et donc diminuer les dégâts susceptibles de se produire. Cependant, si ces bandes pallient quelque peu ce premier défaut, elles ne sont pas satisfaisantes en ce qui concerne la transmission sans perturbation des ondes électromagnétiques.

Le brevet US 4 237 514 décrit une bande parafoudre très fine en polyester. Sur la face de cette bande destinée à être exposée, est fixé un dépôt de particules métalliques (aluminium en général) au moyen d'un époxy souple. Cette bande présente une résistance ohmique très grande mais elle peut conduire, sur sa face extérieure, l'arc de foudre jusqu'à la masse de l'aéronef. Cette bande a l'avantage d'être peu coûteuse et facile à mettre en place; pourtant elle présente des inconvénients importants. Elle est susceptible de se vaporiser lors du premier impact de foudre, et donc elle ne peut servir qu'une fois. Ce type de bandes est sensible à l'érosion, et peut créer également des parasites électrostatiques générateurs de distorsions du diagramme de rayonnement de l'antenne radar logée à l'intérieur du radôme.

Le brevet US 4 796 153 décrit un autre type de bandes parafoudres qui, en raison de sa plus grande efficacité, est utilisé de façon préférée lorsque l'on désire une protection maximum pour des radars très coûteux. Cette bande est constituée d'un support diélectrique fin ( verre-époxy ). Sur la face exposée de celui-ci, des segments ou pastilles métalliques conducteurs sont fixés, alignés et espacés. Le courant induit par un arc de foudre est acheminé par sauts successifs, de segments en segments, par ionisation locale de l'air au-dessus des segments.

Cependant ce type de bandes présente de nombreux inconvénients. Le premier concerne sa fiabilité : on observe presque à chaque fois au premier tir une érosion à la surface des pastilles qui peuvent se détacher et lorsqu'un trop grand nombre de pastilles adjacentes s'est détaché du substrat, la bande ne fonctionne plus. De plus, le substrat verre-époxy de ces bandes à segments est plus sensible à l'érosion due à l'eau de pluie notamment, ce qui nécessite une couche de protection par une peinture anti-érosion. Mais les pastilles conductrices ne doivent pas être peintes sous peine de rendre la bande inopérante. C'est pourquoi, la réalisation et l'entretien de ces bandes sont fastidieux et coûteux.

Un deuxième inconvénient concerne la liaison du pied ou extrémité de la bande à la masse de l'aéronef. Lorsque ces bandes ne possèdent pas de terminaison, la liaison à la masse de l'aéronef est réalisée par l'intermédiaire d'une pièce métallique appelée cavalier. Ce cavalier comporte des perçages permettant de le fixer sur la masse de l'aéronef, sa pointe étant vissée sur un insert intégré dans le radôme, de sorte que l'extrémité du cavalier recouvre le pied de la bande parafoudre en question. Ce simple recouvrement s'avère peu efficace en raison de la mauvaise continuité électrique obtenue à ce niveau.

Pour pallier cet inconvénient, ces bandes présentent des terminaisons rondes en général, constituées d' une rondelle métallique plate rapportée sur substrat verre-époxy et percées au diamètre de la vis destinée à la prendre en sandwich. Pour l'adapter à la forme de la tête de la vis, un embrèvement est alors réalisé par emboutissage. Mais celui-ci entraîne presque systématiquement une fissuration de la terminaison. Et dans le cas où la terminaison est laissée plate, la tête de la vis, en déformant la terminaison, déforme également le pied de celle-ci, ce qui est inacceptable.

Par ailleurs, ce type de bandes est inefficace dans environ 30% des cas dans des conditions atmosphériques humides ( pluie, givre... ). Lors de ruissellement d'eau et conditions de givrage, il a été observé des perforations de radômes dues à la foudre. Ainsi, ces bandes ne sont pas fiables dans de telles conditions de vol.

Un but de la présente invention est de proposer une bande parafoudre suffisamment transparente aux ondes électromagnétiques, peu coûteuse, résistante à l'érosion, pouvant être utilisée plusieurs fois, d'une conductivité adaptable.

L'invention a pour objet une bande parafoudre, notamment pour la protection de radômes d'aéronefs, comportant une face destinée à être fixée sur une surface à protéger contre la foudre, et une face exposée, qui est caractérisée en ce qu'elle est constituée d'un polymère thermoplastique chargé de particules conductrices.

Un autre but de l'invention est de proposer une bande qui peut être fixée aisément en assurant si on le souhaite une bonne reprise de masse.

Ainsi un objet préféré de l'invention est une bande parafoudre telle que décrite ci-dessus, caractérisée en ce qu'elle comporte une terminaison destinée à assurer la reprise de masse, conformée par des moyens de chauffage et de moulage à la tête d'une vis destinée à prendre la terminaison en sandwich. Elle a une grande faculté de conformation, particulièrement adaptée à la réalisation de cette terminaison assurant une bonne reprise en masse.

Un autre but de l'invention est de proposer dans le cas où les impératifs aérodynamiques le permettent, une bande qui protège efficacement contre les impacts de foudre, en particulier lors de conditions climatiques humides ( pluie, givre... ).

Pour ce faire, la bande selon l'invention telle que décrite ci-dessus est caractérisée en plus en ce que la hauteur la plus grande de la bande au droit de la face fixée est supérieure à une couche d'eau ou de givre susceptible de couvrir la surface à protéger lors de conditions climatiques humides.

Ainsi, dans ce cas, la bande parafoudre présente un point d'attache privilégié de la foudre même dans des conditions atmosphériques difficiles.

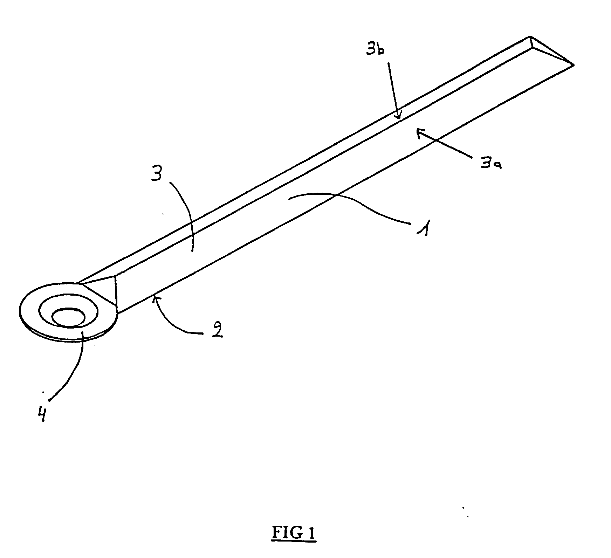

D'autres avantages vont apparaître à la lecture de la description suivante relative à un exemple non limitatif de réalisation de bandes parafoudre selon l'invention, ainsi que du dessin annexé sur lequel
la figure 1 représente une vue en perspective d'une bande parafoudre selon la présente invention.

La bande parafoudre (1) comprend une face inférieure rectangulaire (2) destinée à être fixée par collage, ou tout autre moyen connu, sur la surface à protéger contre les impacts de foudre, notamment les radômes d'aéronefs. Cette bande possède également une face extérieure (3) qui sera exposée aux agressions en conditions d'utilisation, constituée de deux plans (3a) et (3b) formant un dièdre, de manière à ce que la section de la bande soit pseudo-triangulaire. L'angle du dièdre est choisi de façon préférée mais nullement limitative, environ égal à 90 degrés. La bande (1) comporte également une terminaison (4) arrondie et percée au diamètre de la vis destinée à la prendre en sandwich et adaptée à la tête de celle-ci. Une des caractéristiques de la présente bande est le fait que cette terminaison peut être mise en forme aisément de manière à réaliser une terminaison adaptée au type de vis choisie, chaque type de radôme nécessitant un type de vis différent.

La bande parafoudre est réalisée en polymère thermoplastique, chargé de particules conductrices. Ce polymère thermoplastique est de façon préférée du PEEK ou poly éther éther ketone, un thermoplastique connu puisque utilisé en aéronautique, notamment pour sa bonne résistance à l'érosion. Cependant cet exemple de réalisation n'est nullement limitatif : ainsi, le thermoplastique peut être choisi parmi d'autres polymères tels que le PPS ( poly phényl sulfures ), le PPO ( poly phénylène oxyde ) notamment, ou un mélange de ces mêmes polymères.

Cette bande thermoplastique (1) est chargée de particules conductrices de carbone issues de différentes qualités de noir de carbone selon la résistivité à obtenir. En particulier, la surface de contact des noirs de carbone utilisés est comprise, de façon non limitative, entre 600 et 1300 m²/g, pour des concentrations de 2 à 5% par exemple. De la même manière, de façon non limitative, ces particules peuvent être également constituées de métal, de ferrites, de particules de polymères conducteurs tels que le polyaniline, le polypyrrol... Ces particules peuvent également être constituées d'un mélange des particules précitées. Le choix des particules conductrices et de leur concentration est effectué en fonction des exigences en matière de transparence électromagnétique ainsi que de la conductivité requise.

Lorsque les exigences aérodynamiques le permettent, la bande (1) a une épaisseur maximale supérieure à une couche d'eau ou de givre susceptible de couvrir la partie de l'aéronef sur laquelle est disposée la bande parafoudre. En effet, l'arête résultant de la forme pseudo-triangulaire de la bande émerge d'une couche d'eau et de givre, et donc, la bande présente toujours un point d'attache lors de conditions humides. Cette épaisseur la plus grande est voisine ou supérieure à 2,5 mm. Elle est variable et déterminée en fonction des géométries de la bande parafoudre et de la surface sur laquelle elle est fixée. Des tests sur avions civils ont montré que les épaisseurs d'eau calculées sont en général inférieures à 2,5 mm.

La bande selon l'invention étant réalisée en polymère thermoplastique, elle est de fabrication simple. Le thermoplastique utilisé est rendu conducteur par ajout d'une charge conductrice. L'opération qui consiste à incorporer la proportion de carbone (particules conductrices) suffisante au polymère pour obtenir la conductivité nécessaire la plus élevée est appelée " compoundage ". On obtient ainsi un mélange maître qui se présente sous forme de granules. Il est possible ensuite de lui incorporer, de façon non limitative, des granules de polymère pur de façon à abaisser la conductivité du mélange. Cette opération permet d'adapter la conductivité d'une bande parafoudre à sa longueur totale, par dilution du mélange maître. Il est en effet connu que la conductivité requise croît avec la longueur de la bande.

L'avantage de la bande parafoudre selon la présente invention réside dans le fait qu'elle est très résistante à l'érosion due à la pluie ou au sable notamment. Sa composition résiste également aux agressions chimiques éventuelles : huiles, hydrocarbures...

Elle est de réalisation peu coûteuse, se monte facilement sur les structures à protéger, et présente une certaine flexibilité pour s'adapter sans dommage aux déformations du support auquel elle adhère. Ainsi, elle peut être rendue auto-adhésive par des moyens connus. Son remplacement est aisé et son entretien plus facile que celui des bandes existantes telles les bandes à pastilles.

Le caractère thermoplastique du polymère permet une mise en forme aisée. Celle-ci peut être mise en oeuvre par le procédé connu d'extrusion, ou tout autre moyen. Le mélange maître réchauffé à une température inférieure à sa température de fusion est poussé par l'intermédiaire d'une vis sans fin à travers une filière pour lui donner la géométrie voulue.

La mise en forme de la terminaison pour la reprise de masse est également aisée. Elle peut être réalisée notamment à l'aide d'une pince chauffante dans laquelle on engage la bande (1) par l'une de ses extrémités. Cette terminaison est alors pincée entre deux mors dont l'un est la réplique exacte de la tête de vis qui viendra s'appuyer dessus lors du montage. La bande (1) a de façon avantageuse mais non limitative, une largeur d'environ 10 mm; tandis que la longueur sera ajustée en fonction des nécessités du montage, entre 0,3 et 2 m par exemple.

La conception et le procédé de réalisation de bandes parafoudres selon la présente invention permet d'obtenir de grandes longueurs de bandes. Ainsi il est possible de ne stocker que des bandes sans terminaison, la terminaison adaptée au radôme considéré étant réalisée à la demande à l'aide de moyens de chauffage et moulage par exemple. Cette transformation est rendue possible par la nature même du matériau thermoplastique, ce qui ne pourrait être possible avec d'autres polymères tels que les élastomères par exemple. Il n'est plus nécessaire de gérer des stocks de bandes à terminaisons embouties différentes dont la réalisation de la terminaison était malaisée. Ainsi cette bande peut être mise en forme sans aucun des problèmes rencontrés auparavant.

Bien sûr, la bande parafoudre (1) peut être disposée sur toute partie d'un aéronef où il est requis une protection contre les impacts de foudre.

La présente invention ne se limite pas aux réalisations exposées ci-dessus. Ainsi, la section de la bande (1) peut être également trapézoïdale avec la face la plus grande collée, rectangulaire ou de forme circulaire la face plane étant collée.

## Revendications

1. Bande parafoudre (1), notamment pour la protection de radômes d'aéronefs, comportant une face (2) destinée à être fixée sur la surface à protéger contre la foudre, et une face exposée (3), caractérisée en ce qu'elle est constituée d'un polymère thermoplastique chargé de particules conductrices.

2. Bande parafoudre selon la revendication 1, caractérisée en ce qu'elle comporte une terminaison (4) destinée à assurer la reprise de masse, conformée par des moyens de chauffage et de moulage à la tête d'une vis destinée à prendre la terminaison en sandwich.

3. Bande parafoudre selon la revendication 1, caractérisée en ce que la hauteur la plus grande de la bande au droit de la face fixée est supérieure à une couche d'eau ou de givre susceptible de couvrir la surface à protéger lors de conditions climatiques humides.

4. Bande parafoudre selon la revendication 3, caractérisée en ce que la hauteur la plus grande de la section de la bande, est voisine ou supérieure à 2,5 mm.

5. Bande parafoudre selon l'une quelconque des revendications 1,3 ou 4, caractérisée en ce que la géométrie de la section de la bande parafoudre est choisie parmi les géométries suivantes : pseudo-triangulaire, trapézoïdale, rectangulaire, semi-circulaire.

6. Bande parafoudre selon la revendication 1, caractérisée en ce que le polymère thermoplastique est choisi parmi les polymères suivants : PEEK, PPS, PPO, ou un mélange de ceux-ci.

7. Bande parafoudre selon la revendication 1, caractérisée en ce que les particules conductrices sont choisies parmi les particules suivantes : particules de noir de carbone, particules métalliques, particules de polymères conducteurs, ou un mélange de ces particules.

8. Bande parafoudre selon la revendication 1, caractérisée en ce que sa face destinée à être fixée sur la surface à protéger contre la foudre est recouverte d'une substance auto-adhésive.

## Patentansprüche

1. Blitzableiterstreifen (1), insbesondere für den Schutz von Radarköpfen an Luftfahrzeugen, dessen eine Seite (2) auf der gegen den Blitz zu schützenden Oberfläche befestigt und die andere Seite (3) dem Blitz ausgesetzt wird, dadurch gekennzeichnet, dass dieser Streifen aus einem mit leitenden Partikeln geladenen thermoplastischen Polymer besteht.

2. Blitzableiterstreifen gemäß Patentanspruch 1, dadurch gekennzeichnet, dass er mit einem Ende (4) zum Gewährleisten der Masseaufnahme ausgestattet ist, gebildet von Heiz- und Formmitteln am Kopf einer Schraube, welche das Ende einklemmt.

3. Blitzableiterstreifen gemäß Patentanspruch 1, dadurch gekennzeichnet, dass die größte Höhe des Streifens rechtwinklig zu der befestigten Seite höher ist als eine Wasser- oder Rauhreifschicht, die die zu schützende Oberfläche eventuell bei feuchten Wetterverhältnissen bedecken könnte.

4. Blitzableiterstreifen gemäß Patentanspruch 3, dadurch gekennzeichnet, dass die größte Höhe des Streifenquerschnitt um oder über 2,5 mm beträgt.

5. Blitzableiterstreifen gemäß irgendeinem der Patentansprüche 1, 3 oder 4, dadurch gekennzeichnet, dass die Geometrie des Querschnitts des Blitzableiterstreifens unter den folgenden Geometrien gewählt wurde: pseudodreieckig, trapezförmig, rechteckig, halbkreisförmig.

6. Blitzableiterstreifen gemäß Patentanspruch 1, dadurch gekennzeichnet, dass das thermoplastische Polymer unter den folgenden Polymeren gewählt wird: PEEK, PPS, PPO, oder einer Mischung dieser Polymere.

7. Blitzableiterstreifen gemäß Patentanspruch 1, dadurch gekennzeichnet, dass die leitenden Partikel unter den folgenden Partikeln gewählt werden: Rußschwarzpartikel, Metallpartikel, Leitpolymerpartikel, oder eine Mischung dieser Partikel.

8. Blitzableiterstreifen gemäß Patentanspruch 1, dadurch gekennzeichnet, dass die auf der gegen den Blitz zu schützende Oberfläche zu befestigende Seite mit einer selbsthaftenden Substanz beschichtet ist.

## Claims

1. Lightning strip (1), particularly for protection of aircraft radomes, having a face (2) designed to be attached to the surface to be protected from lightning and an exposed face (3), characterized in that it is comprised of a thermoplastic polymer filled with conducting particles.

2. Lightning strip according to Claim 1, characterized in that it has a terminal (4) designed to ensure grounding, shaped by heating and molding means to the head of a screw designed to hold the terminal sandwich-fashion.

3. Lightning strip according to Claim 1, characterized in that the greatest height of the strip at right angles to the fixed face is greater than a layer of water or ice that might cover the surface to be protected under wet weather conditions.

4. Lightning strip according to Claim 3, characterized in that the greatest height of the strip section is approximately 2.5 mm or more.

5. Lightning strip according to any of Claims 1, 3, or 4, characterized in that the geometry of the lightning strip section is chosen from the following geometries: pseudotriangular, trapezoidal, rectangular, or semicircular.

6. Lightning strip according to claim 1, characterized in that the thermoplastic polymer is chosen from the following polymers: PEEK, PSS, PPO, or a mixture thereof.

7. Lightning strip according to Claim 1, characterized in that the conducting particles are chosen from the following particles: carbon black particles, metal particles, conducting polymer particles, or a mixture of these particles.

8. Lightning strip according to Claim 1, characterized in that its face designed to be attached to the surface to be protected against lightning is covered with a self-adhesive substance.
